# EUROPEAN PATENT SPECIFICATION

(11) **EP 3 649 839 B1**
(45) Date of publication and mention of the grant of the patent: **03.03.2021**
(21) Application number: 19204596.1
(22) Date of filing: 22.10.2019
(51) Int. Cl.: A01B 59/042, B60D 1/46

(54) **ADJUSTABLE HEIGHT TOWING DEVICE**
HÖHENVERSTELLBARE ANHÄNGEKUPPLUNG
ATTELAGE DE REMORQUE RÉGLABLE EN HAUTEUR

(30) Priority: 06.11.2018 IT 201800010086
(43) Date of publication of application: 13.05.2020
(73) Proprietor: V. Orlandi S.p.A., 25020 Flero (BS) (IT)
(72) Inventor: GRASSI, Luigi, 27010 ALBUZZANO (Pavia) (IT); TAGLIAFERRI, Carlo, 25124 BRESCIA (IT)
(74) Representative: Tansini, Elio Fabrizio

(56) References cited:
- EP-A1- 0 823 343
- EP-A1- 0 843 956
- EP-A1- 2 591 926
- US-A1- 2013 154 235

## Description

The present invention relates to an adjustable height towing device. The device in question is suitable for being conveniently installed on tractors or other vehicles for agricultural use, to allow the coupling of the drawbar of a trailer.

However, the use of the device in question on other types of work vehicles is not excluded.

There are known towing devices comprising a pair of uprights facing each other, and connected by one or more cross-beams so as to define a rigid frame which can be fixed to the rear part of a tractor.

A slide is placed between the uprights, and supports the towing hook operatively engageable with a drawbar of a trailer, for example a waggon or an agricultural machine of a different type.

In the agricultural field the possibility to adjust the height position of the towing hook is almost always required, to allow a correct alignment of the hook with the drawbar of trailers or towed equipment.

Vertical adjustment is normally carried out by sliding the slide along a pair of special guides formed in the aforementioned uprights.

Locking means associated with the slide allow it to be blocked along the guides in a plurality of predetermined positions, selectable by the operator as required each time. Such locking means provide for the presence of two sets of engagement seats, distributed along each of the guides, respectively, and a pair of pins operatively associated with the slide, and slidably guided between a locking position and an unlocking position. In the locking position, the pins are inserted each in one of the engagement seats to lock the slide along the guides. In the unlocking position, the pins are unbound from the engagement seats to enable the sliding of the slide along the guides.

Other examples of known implements are disclosed in US 2013/154235 A1, EP 2 591 923 A1 and EP 0 343 953 A1.

To adjust the height position of the hook, the operator first acts on the locking means by operating on a special handle, to make the pins of the sliding slide re-enter, then reposition the hook vertically and, once it has reached the desired position, he performs a new manoeuvre to make the side pins come out, positioning them in the engagement seats arranged along the sliding guides.

However, the Applicant has observed that the pins sometimes may not come out properly, for example due to a wrong manoeuvre, due to the presence of dirt, mud or debris in the engagement seats, due to a deterioration of the opening-closing mechanism of the pins, or for other causes.

Failure to reach the complete and correct coming out of the pins is dangerous, because due to working stresses, the pins may partially or completely retract and let the towing hook sliding downwards and let it come out from the sliding guides causing the loss of the trailer or of the towed equipment.

The aim of the present invention is to overcome the limits of the state of the art and increase the operational safety of the current towing devices. In this respect, it has been found that the safety of use can be significantly increased by providing suitable sensors that are capable of detecting the correct insertion of the pins in the respective seats, and/or signalling a failed or incorrect insertion of the same so that the operator can promptly intervene to restore the safety conditions of the hook.

More in particular, the present invention relates to a towing device as defined in claim 1.

The safety of use of the towing device is thus significantly increased. In fact, the presence of the sensor devices makes it possible to immediately signal to the operator the state of failed achievement of the correct locking position, so as to reduce the risk that the towing device may be accidentally used in precarious stability conditions.

In one or more preferred embodiments of the invention, they can furthermore provide at least one of the characteristics expressed in one or more of the dependent claims.

Further characteristics and advantages of the present invention will become more apparent from the description of an exemplary, but not exclusive, and therefore non-limiting preferred embodiment of a connecting apparatus for towing vehicles, as illustrated in the appended drawings, wherein:
figure 1 is a partially interrupted perspective view showing a towing device according to the present invention;
figure 2 shows a slide of the device in question, with the pins in the locked condition, in perspective and in partial section seen from the opposite side with respect to figure 1;
figure 3 shows the slide of figure 2 with the pins in the unlocking condition;
figure 4 is a perspective view illustrating an indicative example of a second embodiment of the locking means which can equip the slide; figure 5 is indicative of a third embodiment of the locking means which can equip the slide.

With reference to the appended figures, 1 indicates an adjustable height towing device, according to the present invention.

The device comprises a pair of uprights 2 facing each other. In particular, the uprights have each an inner surface 2a facing the other upright 2. Furthermore, each upright 2 has an outer surface 2b opposite to the inner surface 2a. These uprights 2 are connected by one or more cross-beams 3, together with which they define a frame 4. The frame 4 is rigidly engageable to the rear part of a tractor.

The apparatus 1 further comprises a slide 5. This slide 5 is placed between the uprights 2, and can be fixed to a hook 6 which in turn can be operatively engageable with the drawbar of a trailer (not shown). In fact, the slide 5 has the function of supporting this hook and allowing the connection between the vehicle and the trailer.

To vary the height of the hook 6, the slide 5 is movable along at least one substantially vertical sliding direction.

In particular, the slide 5 is slidable along at least one guide 7 connected to the frame 4. In particular, a pair of guides 7 is provided, each formed on one of the uprights 2.

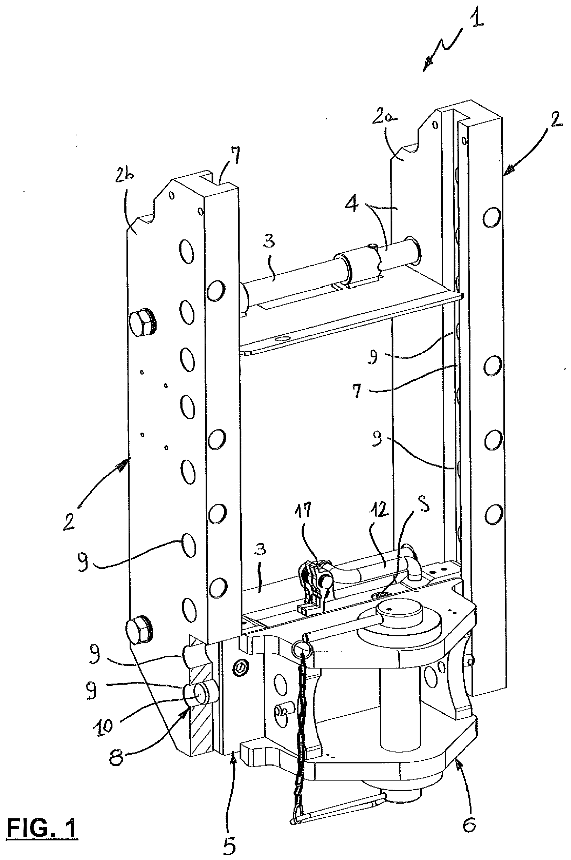

With reference in particular to figure 1, each guide 7 is substantially defined by a recess or groove with a straight development, formed directly on the respective upright 2, in particular at the inner surface 2a. It should be noted that the slide 5 has two end portions 5a which slide inside the uprights 2 and, in particular, inside the respective guides 7.

The apparatus 1 further comprises locking means 8 associated with the slide 5. These locking means 8 have the function of locking the slide 5 in a plurality of positions on the guides 7.

In detail, each upright 2 has a plurality of engagement seats 9, for example in the form of through holes, preferably arranged along the groove which defines the guide 7. Each engagement seat 9 is preferably arranged at the same height as a similar engagement seat 9 made on the opposite upright 2.

A pair of pins 10 is carried by the slide 5, and each pin 10 is configured to selectively insert into one of the engagement seats 9 made on one of the uprights 2.

More in detail, each pin 10 is slidably guided with respect to the slide 5, and is switchable between a locking position in which it is inserted in one of the engagement seats 9 to lock the slide 5, and an unlocking position in which it is unbound from the engagement seat 9 and retracted towards the slide 5, allowing it to slide along the guides 7.

The movement of the pins 10 between the locking position and the unlocking position can conveniently be obtained through a control mechanism 11 operable by a handle 12. Preferably, the translation towards the unlocking position takes place in contrast with at least one return spring 13 operating between the pins 10, or other elastic members which tend to return and hold the pins themselves in the locking position.

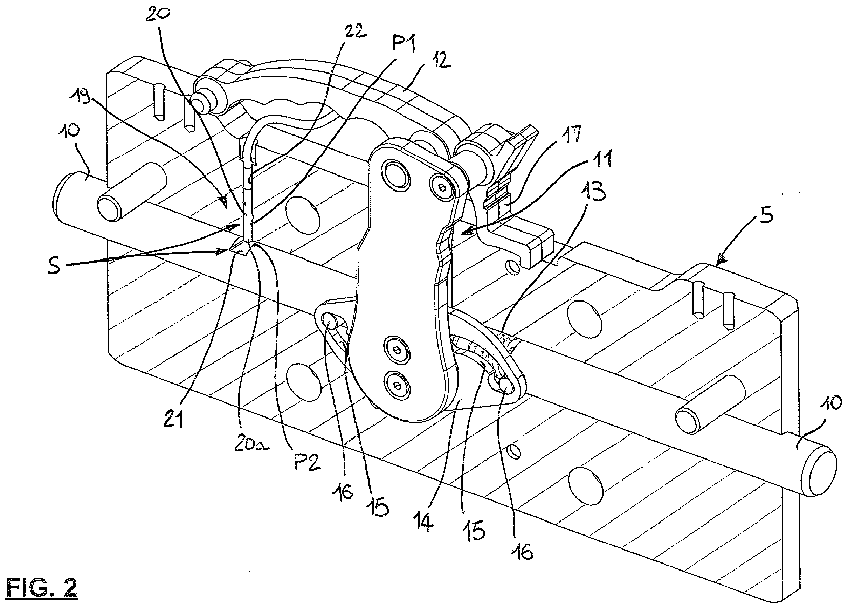

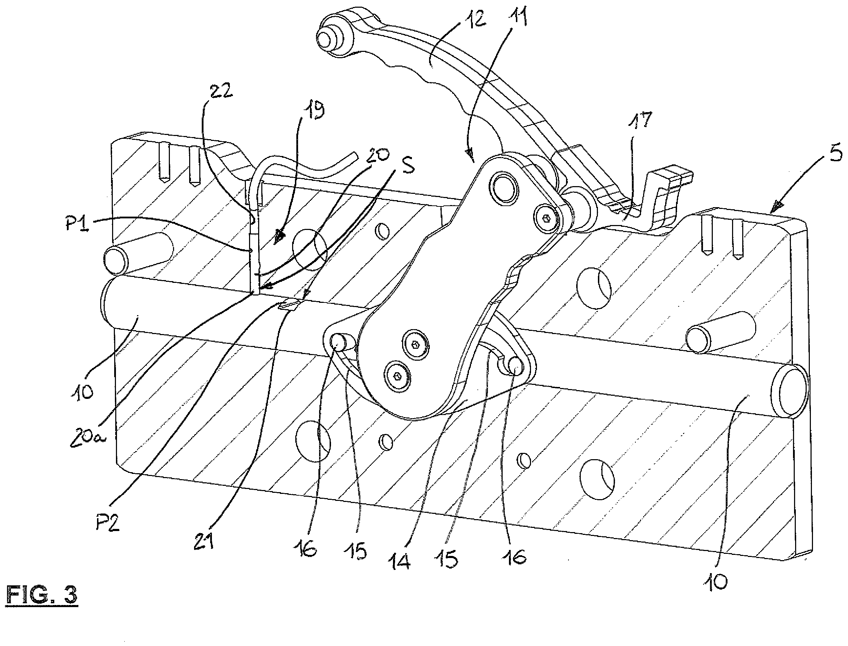

In the example shown in figures 1 to 3, the control mechanism 11 provides a plate 14 constrained to the handle 12 rotatably bound to the slide 5. The plate 14 has a pair of arched slots 15 which operatively bind respective plungers 16 projecting radially from the pins 10. The manual action on the handle 12, after unbinding of a locking element 17, determines the rotation of the plate 14 and, as a result of the binding between the slots 15 and the plungers 16, the consequent displacement of the pins 10 towards the unlocking position, in contrast to the action of the return spring 13.

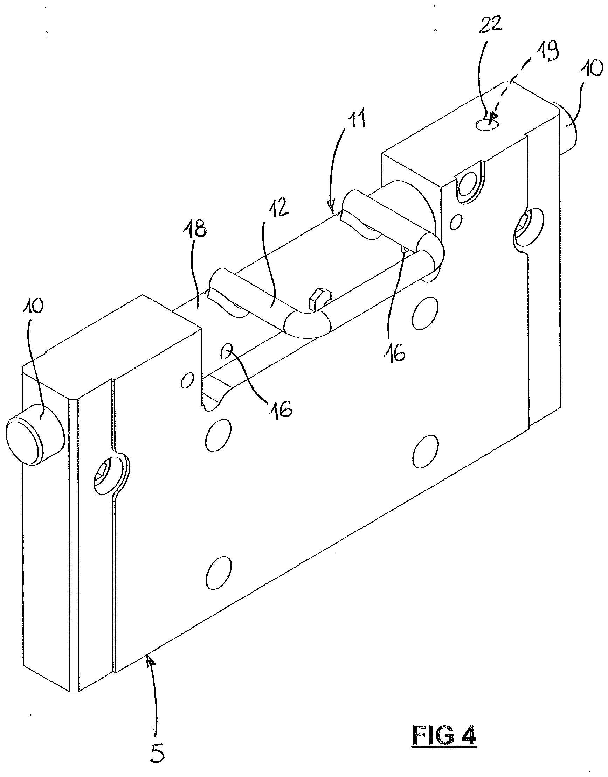

The invention can also be implemented in the presence of control mechanisms of different types, depending on requirements. For example, in the control mechanism 11 shown in figure 4, a tubular body 18 inside which the pins 10 are partially inserted is provided associated to the slide 5. The tubular body can rotate around its own axis on command of the handle 12, to control the movement of the pins 10, for example by means of respective plungers 16, sliding inside helicoidal (not visible) slits formed on the pins 10.

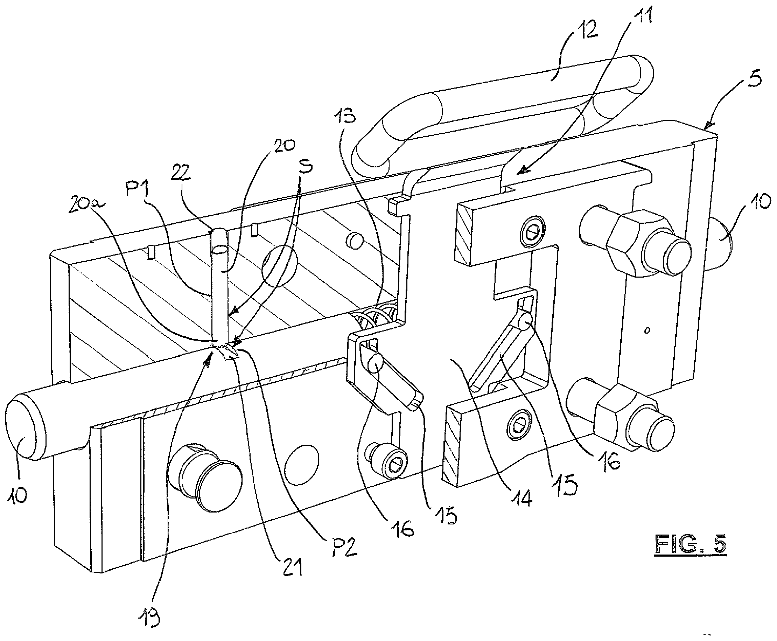

In the example of figure 5, the control mechanism 11 provides a plate 14, integral with the handle 12, slidably bound with the slide 5. The plate 14 has a pair of oblique slots 15 which operatively bind respective plungers 16 projecting radially from the pins 10. The manual action on the handle 12 determines the translation of the plate 14 and, as a result of the binding between the slots 15 and the plungers 16, the consequent displacement of the pins 10 in the unlocking position, in contrast to the action of the return spring 13.

The device 1 further comprises sensor devices 19 for detecting the correct insertion of the pins 10 in the respective engagement seats 9, in conjunction with the actuation of the locking position.

The use of at least one sensor S comprising at least a first portion P1 carried by the slide 5 and a second portion P2 carried by at least one of the pins 10 is in fact provided.

The sensor S is switchable between a first and a second operating condition to emit a warning signal following a relative displacement between the first portion P1 and the second portion P2.

In the examples described, in which the pins 10 are mechanically constrained to each other (by means of the plate 14 or the tubular body 18) so as to move simultaneously between the locking position and the unlocking position, only one sensor S can be conveniently provided for checking the positioning of both pins 10. However, the possibility of using several sensors, for example a sensor S for each of the pins 10, is not excluded, especially in cases where the pins 10 are movable independently of one another.

In a preferred embodiment, the sensor S essentially comprises an inductive detector 20 and a ferromagnetic reference 21 carried by one and the other of said first and second portions P1, P2 respectively.

Different alternative solutions can be chosen instead of the use of inductive detectors, such as for example capacitive, magnetic, optical, ultrasonic detectors or even mechanical microswitches.

Preferably, the inductive detector 20 and the ferromagnetic reference 21 form part of the first portion P1 and of the second portion P2 respectively.

However, a mutually inverted placement with respect to that described cannot be excluded. In a further possible alternative embodiment, the first portion P1 can be installed on at least one of the uprights 2 at the guide 7.

More particularly, in the illustrated examples the inductive detector 20 constituting the first portion P1 is bound along a hole 22 formed in the slide 5, radially with respect to the pin 10, and having an open end towards the pin itself.

The ferromagnetic reference 21 constituting the second portion P2 can be obtained in turn directly on the pin 10, by means of a surface discontinuity configured to face, when the pin 10 is in the locked position, at an active end 20a of the inductive detector 20. For example, this surface discontinuity can be defined by a circumferential throat or a recess or of a suitable depth, formed in the outer surface of the pin 10.

The sensor S is suitable for detecting the correct insertion of each pin 10 in the locking condition in one of the respective engagement seats 9. In fact, when the pin 10 moves axially starting from the locked position, a displacement of the ferromagnetic reference 21 is determined with respect to the inductive detector 20. The consequent variation of the magnetic field near the active end 20a determines the switching of the state of the inductive detector 20, from the first to the second operating condition, with simultaneous emission or interruption of the warning signal.

The warning signal, possibly after being processed through an electronic control unit neither described nor illustrated since it can be made in a known way, can determine the activation of at least one signalling device, for example of the optical and/or acoustic type.

This signalling device, installed for example in the driving position and/or in near the towing device, is operatively connected to the sensor S and configured to promptly inform the operator of the sudden displacement of the pins 10 from the correct locking position.

The connection between the sensor S and the signalling device can be obtained by cable, but in a preferred embodiment it is provided that the sensor S is equipped with a transmitter configured to send wirelessly the warning signal to the signalling device itself. The absence of connection cables facilitates the excursion of the slide 5 during the hook height adjustment and eliminates the risk of damage to the cables themselves.

In a preferred embodiment, the signalling device can provide for the use of a pair of warning lights, respectively green and red, to indicate the correct achievement of the locking position and of the unlocking position and/or any non-compliant operating status to the lock position respectively.

At least the red light can be combined with an acoustic indicator, to reinforce the signal of the state of danger.

In addition or alternatively, it can be provided that the correct insertion of the pin 10 in the locking condition determines the emission by the sensor S of a consent signal. The consent signal can be processed by the electronic control unit to enable the activation of the green light or other optical or acoustic consent signal, which signals the correct insertion of the pins 10 to the operator occupying the driving position of the tractor. When the pins 10 translate into the unlocking condition, or for any reason they are not correctly inserted in the engagement seats 9, the emission of the enabling signal by the respective sensor S is absent, in the absence of which the electronic control unit can command the signalling device to emit the alarm signal.

The invention allows to achieve an effective and constant control of the correct connection of the slide to the uprights, with a consequent increase in the safety of use of the towing device.

The invention is also suitable for being implemented also by providing changes to existing towing devices, through simple operations and/or replacement of a limited number of parts. In particular, the described example can be implemented by simple machining or replacement of one of the pins 10, in order to produce the ferromagnetic reference 21, and of the slide 5 for the purpose of housing the inductive detector 20.

The housing of the inductive sensor and of the ferromagnetic reference 21 inside the slide 5 conveniently protects them from exposure to external atmospheric and environmental agents, as well as from possible collisions with foreign bodies.

## Claims

1. An adjustable height towing device, comprising a frame (4) having a pair of uprights (2);
a pair of guides (7) each associated with one respective upright (2);
a slide (5) slidable along said guides (7) to move at least along a substantially vertical sliding direction, said slide (5) being fixable to a hook (6) for connecting a trailer;
locking means (8) associated with said slide (5) to lock it in a plurality of positions along said guides (7);
wherein said locking means (8) comprise a plurality of engagement seats (9), arranged on each upright (2) along a longitudinal development direction of the guides (7), and a pair of pins (10) carried by the slide (5), and slidingly guided between a locking position in which they are each inserted in one of the engagement seats (9) to lock the slide (5) along the guides (7), and an unlocking position in which they are disengaged from the coupling seats (9) to enable sliding of the slide (5) along the guides (7);
**characterized in that** it also comprises sensor devices (19) for detecting the correct insertion of the pins (10) in the respective engagement seats (9) in the locked position.

2. Device according to claim 1, wherein said sensor devices (19) comprise at least one sensor (S) comprising a first portion (P1) carried by the slide (5) and a second portion (P2) carried by at least one of said pins (10), said sensor (S) being switchable between a first and a second operating condition to emit a warning signal in consequence of a relative displacement between the first portion (P1) and the second portion (P2).

3. Device according to claim 1, wherein said sensor devices (19) comprise at least one sensor (S) comprising a first portion (P1) placed near in proximity of one of the guides (7) and a second portion (P2) carried by at least one of said pins (10), said sensor (S) being switchable between a first and a second operating condition to emit a warning signal in consequence of a relative displacement between the first portion (P1) and the second portion (P2).

4. Device according to claim 2 or 3, further comprising a signalling device operatively connected to said sensor (S) to emit an alarm signal in response to said warning signal.

5. Device according to claim 4, wherein the sensor (S) is equipped with a transmitter configured to send the warning signal to said signalling device by wireless transmission.

6. Device according to one or more of the preceding claims, wherein said sensor devices (19) comprises an inductive detector (20) and a ferromagnetic reference (21) respectively constituting either of said first and second portions (P1, P2).

7. Device according to claim 6, wherein the inductive detector (20) and the ferromagnetic reference (21) are respectively carried by the slide (5) and by said pin (10).

8. Device according to one or more of claims 2 to 7, wherein the first portion (P1) of the sensor (S) is engaged along a hole (22) formed in the slide (5) and having an open end towards the pin (10).

9. Device according to claim 7 or 8, wherein the ferromagnetic reference (21) of the sensor (S) comprises a surface discontinuity obtained on the pin (10) and radially facing the inductive detector (20) in the locked position.

10. Device according to claim 9, wherein the surface discontinuity is defined by a recess formed on an external surface of the pin (10).

## Patentansprüche

1. Höhenverstellbare Anhängekupplung, umfassend einen Rahmen (4) mit einem Paar Streben (2);
ein Paar Führungen (7), von denen jede mit einer entsprechenden Strebe (2) verbunden ist;
einen entlang der genannten Führungen (7) verschiebbaren Schlitten (5), um sich mindestens entlang einer im Wesentlichen vertikalen Verschiebungsrichtung zu bewegen, wobei der genannte Schlitten (5) zum Ankuppeln eines Anhängers an einem Haken (6) befestigt werden kann;
mit dem genannten Schlitten (5) gekoppelte Blockiervorrichtungen (8), um diesen in einer Vielzahl von Positionen entlang der genannten Führungen (7) zu blockieren;
wobei die genannten Blockiervorrichtungen (8) eine Vielzahl von auf jeder Strebe (2) entlang einer Längsverlaufsrichtung der Führungen (7) angeordneten Kupplungssitzen (9) und ein Paar von dem Schlitten (5) getragene Bolzen (10) umfassen, die verschiebbar zwischen einer Blockierposition, in der jeder von ihnen in einen der Kupplungssitze (9) eingesetzt ist, um den Schlitten (5) entlang der Führungen (7) zu blockieren, und einer Freigabeposition, in der sie von den Kupplungssitzen (9) entkuppelt sind, um das Verschieben des Schlittens (5) entlang der Führungen (7) zu ermöglichen, geführt werden;
**dadurch gekennzeichnet, dass** sie außerdem Sensorvorrichtungen (19) zum Erfassen des korrekten Einsetzens der Bolzen (10) in die jeweiligen Kupplungssitze (9) in der blockierten Position umfasst.

2. Höhenverstellbare Anhängekupplung nach Anspruch 1, bei der die genannten Sensorvorrichtungen (19) mindestens einen Sensor (S) umfassen, der einen ersten von dem Schlitten (5) getragenen Abschnitt (P1) und einen zweiten von mindestens einem der genannten Bolzen (10) getragenen zweiten Abschnitt (P2) umfasst, wobei der genannte Sensor (S) zwischen einer ersten und einer zweiten Arbeitsbedingung umgeschaltet werden kann, um ein Warnsignal infolge der jeweiligen Verschiebung zwischen dem ersten Abschnitt (P1) und dem zweiten Abschnitt (P2) auszusenden.

3. Höhenverstellbare Anhängekupplung nach Anspruch 1, bei der die genannten Sensorvorrichtungen (19) mindestens einen Sensor (S) umfassen, der einen in der Nähe einer der Führungen (7) positionierten ersten Abschnitt (P1) und einen von mindestens einem der genannten Bolzen (10) getragenen zweiten Abschnitt (P2) umfassen, wobei der genannte Sensor (S) zwischen einer ersten und einer zweiten Arbeitsbedingung umgeschaltet werden kann, um ein Warnsignal infolge einer relativen Verschiebung zwischen dem ersten Abschnitt (P1) und dem zweiten Abschnitt (P2) auszusenden.

4. Höhenverstellbare Anhängekupplung nach Anspruch 2 oder 3, die außerdem eine operativ mit dem genannten Sensor (S) verbundene Signalvorrichtung umfasst, um ein Alarmsignal als Antwort auf das genannte Warnsignal auszusenden.

5. Höhenverstellbare Anhängekupplung nach Anspruch 4, bei der der Sensor (S) mit einem auf das Aussenden des Warnsignals an die genannte Signalvorrichtung durch schnurlose Übertragung ausgelegten Sender ausgestattet ist.

6. Höhenverstellbare Anhängekupplung nach einem oder mehreren der vorangegangenen Ansprüche, bei dem die genannten Sensorvorrichtungen (19) einen induktiven Detektor (20) und einen ferromagnetischen Bezug (21) umfassen, die jeweils den genannten ersten und zweiten Abschnitt (P1, P2) bilden.

7. Höhenverstellbare Anhängekupplung nach Anspruch 6, bei der der induktive Detektor (20) und der ferromagnetische Bezug (21) jeweils von dem Schlitten (5) und dem genannten Bolzen (10) getragen werden.

8. Höhenverstellbare Anhängekupplung nach einem oder mehreren der Ansprüche 2 bis 7, bei dem der erste Abschnitt (P1) des Sensors (S) entlang einer in dem Schlitten (5) gebildeten Öffnung (22) gekuppelt ist und ein offenes Ende zu dem Bolzen (10) aufweist.

9. Höhenverstellbare Anhängekupplung nach Anspruch 7 oder 8, bei der der ferromagnetische Bezug (21) des Sensors (S) eine auf dem Bolzen (10) erzielte Oberflächendiskontinuität umfasst, die dem induktiven Detektor (20) in der blockierten Position radial gegenüberliegt.

10. Höhenverstellbare Anhängekupplung nach Anspruch 9, bei der die Oberflächendiskontinuität durch eine auf einer Außenfläche des Bolzens (10) gebildete Aussparung definiert wird.

## Revendications

1. Attelage de remorque réglable en hauteur, comprenant un châssis (4) comportant une paire de montants (2) ;
une paire de guides (7) chacun associé à un montant (2) respectif ;
une glissière (5) pouvant glisser le long desdits guides (7) et se déplacer au moins le long d'une direction de glissement sensiblement verticale, ladite glissière (5) pouvant être fixée à un crochet (6) pour la connexion d'une remorque ;
un moyen de verrouillage (8) associé à ladite glissière (5) pour la verrouiller en plusieurs positions le long desdits guides (7) ;
dans lequel ledit moyen de verrouillage (8) comprend une pluralité de sièges d'engagement (9), agencés chacun sur chaque montant (2) le long d'une direction de développement longitudinal des guides (7), et une paire de broches (10) portées par la glissière (5), et guidées par glissement entre une position de verrouillage, dans laquelle elles sont toutes deux insérées dans l'un des sièges d'engagement (9) pour verrouiller la glissière (5) le long des guides (7), et une position de déverrouillage, dans laquelle elles sont désengagées des sièges de couplage (9) pour permettre le glissement de la glissière (5) le long des guides (7) ;
**caractérisé en ce qu'**il comprend également des dispositifs de capteur (19) pour détecter l'insertion correcte des broches (10) dans les sièges d'engagement (9) respectifs en la position verrouillée.

2. Attelage selon la revendication 1, dans lequel lesdits dispositifs de capteur (19) comprennent au moins un capteur (S) comprenant une première partie (P1) portée par la glissière (5) et une deuxième partie (P2) portée par au moins une desdites broches (10), ledit capteur (S) pouvant commuter entre un premier et un deuxième état de fonctionnement pour émettre un signal d'avertissement suite à un déplacement relatif entre la première partie (P1) et la deuxième partie (P2).

3. Attelage selon la revendication 1, dans lequel lesdits dispositifs de capteur (19) comprennent au moins un capteur (S) comprenant une première partie (P1) placée à proximité de l'un des guides (7) et une deuxième partie (P2) portée par au moins une desdites broches (10), ledit capteur (S) pouvant commuter entre un premier et un deuxième état de fonctionnement pour émettre un signal d'avertissement suite à un déplacement relatif entre la première partie (P1) et la deuxième partie (P2).

4. Attelage selon la revendication 2 ou 3, comprenant en outre, un dispositif de signalement connecté de manière fonctionnelle audit capteur (S) pour émettre un signal d'alarme en réponse audit signal d'avertissement.

5. Attelage selon la revendication 4, dans lequel le capteur (S) est équipé d'un transmetteur configuré pour envoyer le signal d'avertissement audit dispositif de signalement par une transmission sans fil.

6. Attelage selon l'une ou plusieurs des revendications précédentes, dans lequel lesdits dispositifs de capteur (19) comprennent un détecteur inductif (20) et une référence ferromagnétique (21) constituant respectivement l'une des première et deuxième parties (P1, P2).

7. Attelage selon la revendication 6, dans lequel le détecteur inductif (20) et la référence ferromagnétique (21) sont portés respectivement par la glissière (5) et par ladite broche (10).

8. Attelage selon l'une ou plusieurs des revendications 2 à 7, dans lequel la première partie (P1) du capteur (S) est engagée dans un trou (22) formé dans la glissière (5) et ayant une extrémité ouverte vers la broche (10).

9. Attelage selon la revendication 7 ou 8, dans lequel la référence ferromagnétique (21) du capteur (S) comprend une discontinuité de surface obtenue sur la broche (10) et orientée de manière radiale vers le détecteur inductif (20) en la position verrouillée.

10. Attelage selon la revendication 9, dans lequel la discontinuité de surface est définie par un évidement formé sur une surface extérieure de la broche (10).
